# EUROPÄISCHE PATENTSCHRIFT

(11) **EP 1 371 951 B1**
(45) Veröffentlichungstag und Bekanntmachung des Hinweises auf die Patenterteilung: **01.06.2005**
(21) Anmeldenummer: 03013058.7
(22) Anmeldetag: 10.06.2003
(51) Int. Cl.: G01D 5/14

(54) **Weitwinkel-Drehwinkelsensor**
Wide-angle angular displacement sensor
Détecteur de déplacement angulaire à grand angle

(30) Priorität: 12.06.2002 DE 10226062
(43) Veröffentlichungstag der Anmeldung: 17.12.2003
(73) Patentinhaber: AB Elektronik GmbH, 59368 Werne (DE)
(72) Erfinder: Wilczek, Klaus, 59368 Werne (DE)
(74) Vertreter: Patentanwälte Wenzel & Kalkoff

(56) Entgegenhaltungen:
- DE-A- 19 630 764
- DE-A- 19 726 691
- DE-A- 19 753 776
- US-B1- 6 400 141

## Beschreibung

Die Erfindung betrifft eine Vorrichtung zur berührungslosen Erfassung von Drehbewegungen sich relativ zueinander bewegender Teile mit
- einer Statoreinheit, bestehend aus zwei asymmetrisch aufgebauten Statorteilelementen, die zwischen sich zwei Abstandsausnehmungen freilassen,
   - wobei in wenigstens einer Abstandausnehmung wenigstens eine Hall-Einheit angeordnet ist und
   - wobei die Statorteilelemente teilringförmig in ein Groß-Statorteilelement und ein Klein-Statorteilelement geteilt sind, wobei das Groß-Statorteilelement einen Bereich von mehr als 180° und das Klein-Statorteilelement einen Bereich von weniger als 180° eines Kreisbogens umfaßt, und
- einer Rotoreinheit, bestehend aus einem Magnetelement, das von einem Magnethalteelement gehalten ist und das unter Belassung eines Luftspaltes gegenüber den Statorteilelementen bewegbar ist,
   - wobei das Magnetelement aus zwei magnetisch bipolaren Magnetsegmentelementen besteht, die wenigstens teilweise in einem ersten Teil aus einem magnetisch nicht leitenden Material angeordnet sind.

Die Erfindung betrifft darüber hinaus die Verwendung der Vorrichtung zur Überwachung eines veränderlichen Betriebsparameters.

Eine Vorrichtung der eingangs genannten Art ist aus der DE 196 30 764 A1 bekannt, die aus einem Statorteilelement besteht, das sich über 240° erstreckt und einem weiteren Statorteilelement, das sich über 120° erstreckt. Zwischen beiden Statorteilelementen sind zwei radialgerichtete Ausnehmungen angeordnet. In einer der Ausnehmungen ist eine Hall-Einheit eingebracht. In den Statorteilelementen ist ein bewegliches Magnetelement angeordnet. In den beiden Statorteilelementen ist unter Belassung eines Luftspaltes eine Rotoreinheit mit einem bipolaren Magnetelement angeordnet. Das Magnetelement besteht aus zwei unterschiedlich langen Magnetteilelementen. Ein Magnetteilelement kann einen Winkelbereich von größer 180° aufweisen. Das Magnetelement ist in eine Kunststoffmasse eingebettet.

Nachteilig ist, daß sich die radial gerichteten Ausnehmungen fertigungstechnisch nur aufwendig ausbilden lassen. Darüber hinaus ermöglicht die Polung des Magnetelements keine volle Ausschöpfung der Winkelvergrößerung. Dadurch, daß die Magnetteilelemente des Magnetelements ungleich lang sind, wird die Linearität des Ausgangssignals negativ beeinflußt.

Aus der WO 95 14 911 A1 der Anmelderin ist es bekannt, die Statorteilelemente aus Blechstapeln aus Texturblech herzustellen. Allerdings werden die einzelnen Bleche mit Ausnehmungen versehen und mit einer Zusammenhaltungsvorrichtung zusammengehalten. Durch die Ausnehmungen wird aber der Verlauf des magnetischen Flusses geändert.

Die nicht vorveröffentlichte DE 100 54 123 A1 zeigt einen Drehwinkelsensor, bei dem die Statorelemente ebenfalls aus Blechstapeln aufgebaut sind. In Abstandsausnehmungen zwischen den Statorteilelementen sind Hall-ICs angeordnet, die um 180° versetzt zueinander angeordnet sein können. Die Hall-ICs sind durch ein Input- und ein Output-Terminal mit einer Steckereinheit verbunden. Allerdings ist der Drehwinkelsensor nur in der Lage, einen Winkel zwischen 0° und 90° zu erfassen.

Die Überwachung eines veränderlichen Betriebsparameters ist sowohl aus der EP 0 457 033 Bi als auch aus der WO 91 12 423 A1 bekannt. Hierzu werden Meßeinrichtungen eingesetzt, die mit gemeinsamer Spannungsversorgung ausgeführt sind.

Nachteilig ist, daß als Meßeinrichtungen Widerstandskombinationen eingesetzt werden. Da die Widerstandswerte abgegriffen werden müssen und die Widerstandsbahnen und die Abgreifer dabei verschleißen bzw. beschädigt werden können, kann die ihnen zugedachte Überwachungsaufgabe nur unzuverlässig erfüllt werden.

Aus der DE 196 34 281 A1 ist ein Drehwinkelsensor bekannt, dessen Statoreinheit aus drei Statorelementen besteht. Zwischen zwei Statorelementen, um die sich ein Magnetelement bewegt, befindet sich in einer Ausnehmung ein Meßelement. Die Ausnehmung kann tangential angeordnet sein. Um einen linearen Meßbereich von 110° zu erreichen, muß allerdings das dritte Statorelement mit einem der anderen beiden Statorelementen magnetisch leitend verbunden werden.

Aus der US 4 107 601 ist es bekannt, Barren aus einem magnetischen Material mit Hilfe einer flexiblen Bahn an einer Rotorwelle angeordnet. Allerdings wird diese Bahn nur dafür eingesetzt, um die Barren beabstandet an die Welle anzudrücken.

In der DE-A-197 53 776 ist ein Drehsensor für eine Drosselklappeneinheit gezeigt. Auf der Drosselklappenwelle ist als Rotor eine Scheibe aus magnetisch leitendem Material angebracht. Auf der Scheibe ist ein einzelnes Permanent-Magnetelement angebracht. Eine Statoreinheit liegt axial benachbart in einer Ebene parallel zur Rotorplatte. Die Statoreinheit aus magnetisch leitendem Material ist kreisförmig und in zwei Segmente unterteilt, die zwischen sich einen Luftspalt frei lassen. In einer Ausführung ist eine unsymmetrische Teilung des Stators in Statorteilelemente gezeigt. Der Luftspalt ist hier als tangential verlaufender Schlitz ausgebildet. In dem Luftspalt ist ein magnetfeldempfindliches Element, z.B. ein Hall-Element angeordnet. Es ist angegeben, daß aus Sicherheitsgründen auch zwei oder mehr solcher Elemente vorhanden sein können. Ein rechtwinklig zu den Statorteilelementen angeordnetes Rückflußteil schließt den magnetischen Kreis und bildet einen möglichst engen Luftspalt zum Rotor.

In der Regel ermöglichen Drehwinkelsensoren eine Winkelerfassung zwischen 0° und 90°.

Ein derartiger Drehwinkelsensor ist aus der WO 95 14 901 A1 bekannt. Er besteht aus einer stationären und einer rotierenden Formation. Die stationäre Formation enthält zwei halbmondförmige Statorelemente, zwischen denen sich eine Abstandsausnehmung befindet, in der ein Hallelement angeordnet ist. Die rotierende Formation weist ein ringförmig ausgebildetes Magnetelement auf, das von einer Halteeinheit gehalten wird und das unter Belastung eines Luftspaltes um die Statorelemente bewegbar ist. Weiterhin sind Drehwinkelsensoren aus der WO 98 25 102 A1, DE 197 16 985 A1, DE 199 03 940 A1 bzw. der EP 1 024 267 A2 der Anmelderin bekannt.

Es stellt sich die Aufgabe, einen Drehwinkelsensor der eingangs genannten Art so weiterzuentwickeln, das sich dieser einfacher herstellen läßt und eine größtmögliche Winkelvergrößerung ausnutzt. Darüber hinaus stellt sich die Aufgabe, den Drehwinkelsensor einem speziellen Einsatz zuzuführen.

Erfindungsgemäß wird diese Aufgabe durch eine Vorrichtung gemäß Anspruch 1 gelöst. Der Aufgabenteil des speziellen Einsatzes des Drehwinkelsensors wird durch die Verfahrensschritte des Anspruchs 22 gelöst. Durch die in den Unteransprüchen aufgeführten Maßnahmen sind vorteilhafte Weiterbildungen und Verbesserungen der im Anspruch 1 angegebenen Vorrichtung möglich, deren vorteilhafte Wirkungen in dem nachstehenden Ausführungsbeispiel genannt werden.

Die mit der Erfindung erzielten Vorteile bestehen insbesondere darin, daß sich die beiden Statorteilelemente durch die besondere Ausführung der Abstandsausnehmungen einfacher fertigen lassen. Desweiteren wird durch die tangentiale Anordnung der Abstandsausnehmungen und die beiden gleich langen bipolaren Magnetsegmente, eine Aufteilung des magnetischen Flusses so ermöglicht, daß er über einen vergrößerten Bereich im wesentlichen linear verläuft. Durch beide Maßnahmen ist es möglich, ohne Unterbrechung einen Winkel in einem vergrößerten Bereich linear zu erfassen. Beide Abstandsausnehmungen können in einer Ebene oder versetzt bei im wesentlichen teilzylindrischen Statorteilelementen angeordnet werden.

Die Statorteilelemente sind unsymmetrisch geteilt, wobei das Groß-Statorteilelement einen Bereich von mehr als 180°, bevorzugt zwischen 200° und 280° eines Kreisbogens und das Klein-Statorteilelement einen Bereich von weniger als 180°, bevorzugt 80-160° eines Kreisbogens umfaßt. Als besonders geeignet hat sich eine Erstreckung des Groß-Statorteilelements von etwa 240° und des Klein-Statorteilelements von etwa 120° erwiesen. Die Magnetsegementelemente umfassen einen Winkelbereich von mehr als 90°, bevorzugt 90-140°, besonders bevorzugt etwa 120°. Mit einem so ausgebildeten Sensor kann ein Winkel zwischen -120° und +120° linear erfaßt werden.

Die mit dem Verfahren nach Anspruch 22 erzielten Vorteile bestehen darin, daß sich durch die Verwendung der Vorrichtung mit den beiden ASIC-Schaltkreiselementen veränderliche Betriebsparameter sicher überwachen lassen. Hierbei ist der Aufbau der Vorrichtung und der große Winkelbereich von bspw. 0° bis 120° bei hoher Linearität, der mit ihr zu erfassen ist, von besonderem Vorteil.

Die Erfindung wird nachstehend anhand eines in der Zeichnung dargestellten Ausführungsbeispiels näher erläutert.

Es zeigen:
- Fig. 1a: eine erste Ausführungsform einer Statoreinheit eines Weitwinkel-Drehwinkelsensors in einer auseinandergezogenen, schematischen, perspektivischen Darstellung,
- Fig. 1b: eine zweite Ausführungsform einer Statoreinheit eines Weitwinkel-Drehwinkelsensors in einer auseinandergezogenen, schematischen, perspektivischen Darstellung,
- Fig. ic: in einer schematischen Schnittdarstellung ein Teil eines Statorelements aus Fig. 1b,
- Fig. 2a: einen Weitwinkel-Drehwinkelsensor mit einer Rotor- und einer Statoreinheit in einer schematischen perspektivischen Darstellung,
- Fig. 2b: einen Weitwinkel-Drehwinkelsensor gemäß Fig. 2 mit eingebauten Halleinheiten von unten gesehen,
- Fig. 3: einen in eine Drosselklappeneinheit angeordneten Weitwinkel-Drehwinkelsensor gemäß der Fig. 1a-2b in einer auseinandergezogenen perspektivischen Darstellung,
- Fig. 4a-4c: Magnetfeldverläufe eines Weitwinkel-Drehwinkelsensors gemäß den Fig. 1 bis 3 bei verschiedenen Positionen der Rotoreinheit,
- Fig. 5a-5d: verschiedene Signalverläufe eines Weitwinkel-Drehwinkelsensors gemäß den Fig. 1 bis 4c in einer schematischen Darstellung,
- Fig. 6: Signalverläufe für eine Überwachungsfunktion.

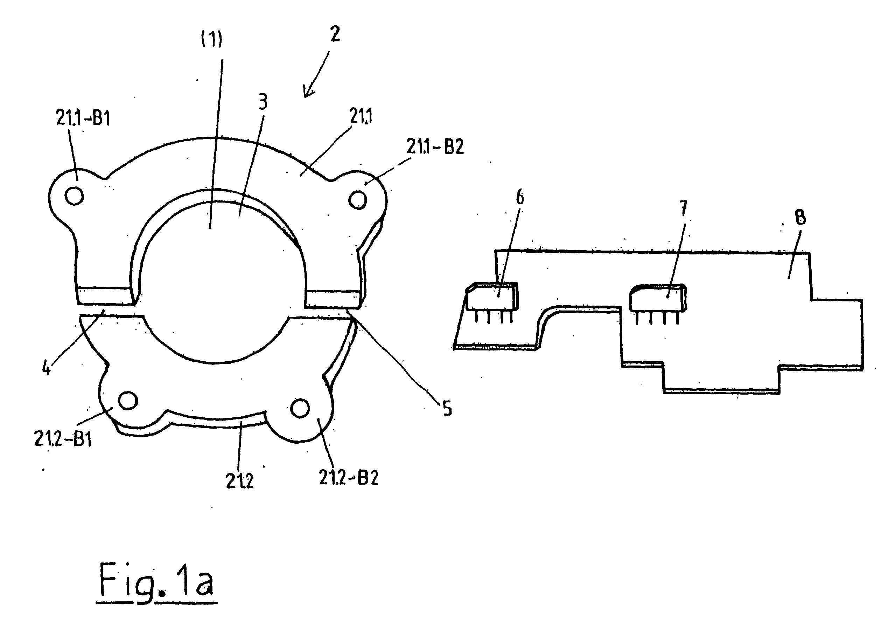

In den Fig. 1a bis 3 ist ein Weitwinkel-Drehwinkelsensor gezeigt.

Er besteht aus:
- einer Rotoreinheit 1 und
- einer Statoreinheit 2.

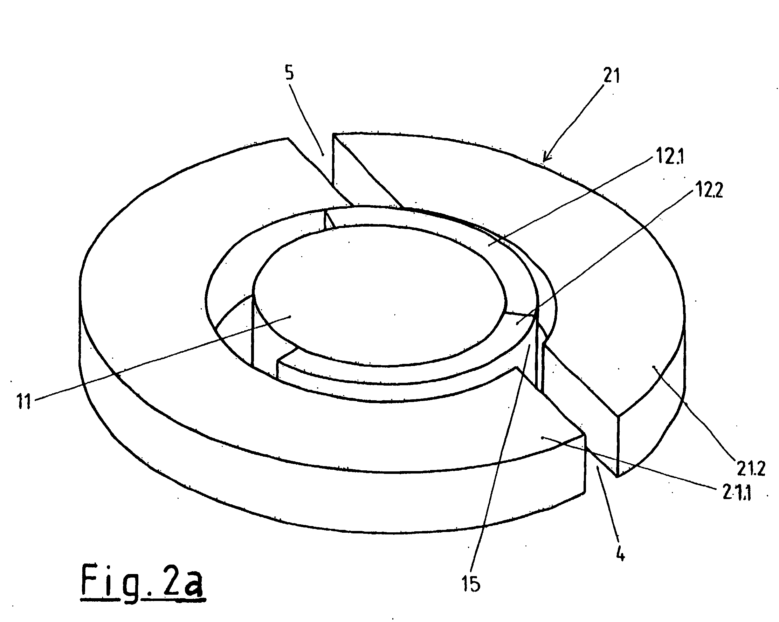

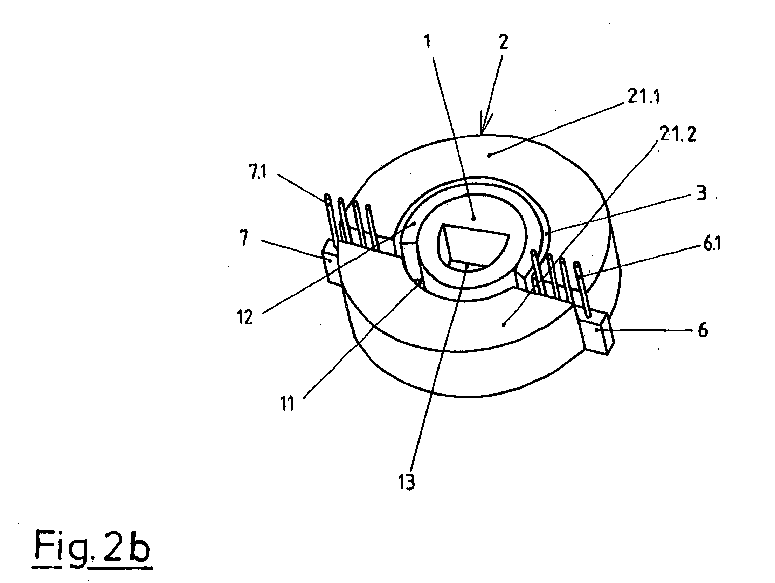

Wie insbesondere wie Fig. 2a und 2b zeigen, weist die Rotoreinheit 1 ein Magnethalteelement 11 aus einem magnetisch nicht leitenden Material auf. Das Magnethalteelement 11 hält ein Magnetelement 12, das aus einem Nord-Magnetsegmentelement 12.1 und einem Süd-Magnetsegmentelement 12.2 besteht. Die Magnetsegmentelemente 12.1, 12.2 umfassen jeweils einen Winkelbereich von etwa 120°.

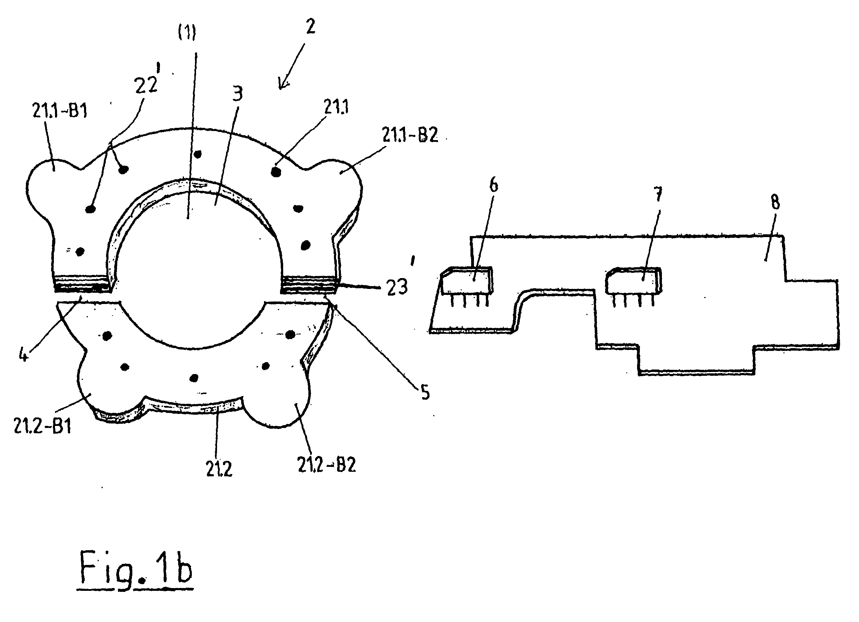

Fig. 1a zeigt eine erste und Fig. 1b eine zweite Ausführungsform einer Statoreinheit. Bei beiden Ausführungsformen umfaßt die Statoreinheit ein Statorelement 21. Das Statorelement 21 ist unterteilt in ein Groß-Statorteilelement 21.1 und ein diesem gegenüberliegendes Klein-Statorteilelement 21.2. Zwischen sich lassen beide Statorteilelemente jeweils eine tangential angeordnete Abstandsausnehmung 4 und eine tangential angeordnete Abstandsausnehmung 5 frei. Im gezeigten Beispiel liegen beide Abstandsausnehmungen in einer Ebene. Die Abstandsausnehmungen 4, 5 sind als Schlitze zwischen parallel verlaufenden Endflächen der Statorteilelemente 21.1, 21.2 ausgebildet. Die Schlitze verlaufen jeweils nicht radial, also in Richtung auf den Mittelpunkt des gebildeten Rings, sondern tangential, d.h. sie liegen auf einer Tangente an einen gedachten Kreis um den Mittelpunkt des Rings.

Das Großstatorelement 21.1 weist spiegelbildlich sich gegenüberliegend zwei Groß-Statorbefestigungselemente 21.1-B1 und 21.2-B2 auf. In den Elementen 21.1-B1 und 21.1-B2 können bei der ersten Ausführungsform gemäß Fig. 1a jeweils Ausnehmungen eingebracht werden.

Das Klein-Statorteilelement 21.2 ist ähnlich ausgebildet. Es weist deshalb sich gegenüberliegend zwei Klein-Statorbefestigungselemente 21.2-B1 und 21.2-B2 auf, die wiederum in der ersten Ausführungsform gemäß Fig. 1a je eine Ausnehmung aufweisen können. In den beiden Abstandausnehmungen 4, 5 sind ASIC-Schaltkreiselemente 6, 7 positioniert, die mit einem Leiterplattenelement 8 verbunden sind.

Das Groß- und das Kleinstatorteilelement 21.1, 21.2 sind in der ersten Ausführungsform gemäß Fig. 1a sind aus einem dickeren Weicheisenblech ausgestanzt oder aus einem gesinterten Weicheisen geformt.

Hingegen sind die Statorelemente 21.1 und 21.2 in der zweiten Ausführungsform gemäß Fig. ib aus einzelnen Blechen 23' aufgebaut, die übereinander gestapelt sind. Zum Einsatz kommen Texturbleche oder dgl., deren Herstellungs- und Bearbeitungsweise aus dem Transformatorenbau bekannt ist.

Die Spezialbleche werden zugeschnitten und können mit Einprägungen 22' versehen werden. Danach werden die Bleche 23' in einem Glühofen bei einer solchen Temperatur erwärmt, daß bei der Bearbeitung aufgebaute Spannungen der kristallinen Struktur beseitigt werden. Es hat sich herausgestellt daß durch Erwärmung auf Temperaturen bevorzugt im Bereich 700 bis 1100°C derartige Spannungen beseitigt werden. Dieser Glühschritt wird bevorzugt unter einer Schutzatmosphäre (z.B. Stickstoff) oder in einem Vakuum durchgeführt.

Die kristalline Struktur wird auch durch Ausnehmungen verändert. Außerdem stören Ausnehmungen die Homogenität des magnetischen Flusses. Deshalb wird ein Zusammenhalten mit Bolzen vermieden. Daher sind in der zweiten Ausführungsform auch keine Ausnehmungen in den Statorbefestigungselementen 21.1-B1, 21.2-B2, 21.2-B1 und 21.2-B2 vorgesehen.

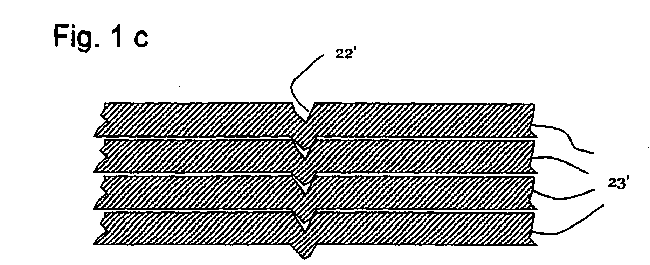

Überraschenderweise hat sich gezeigt, daß die einzelnen Bleche über ihre Einprägungen 22' zusammenzuhalten, indem sie einfach zusammen gepreßt werden. Die Struktur des gebildeten Verbundes ist in Fig. 1C gezeigt. Der zusammengepreßte Block verhält sich dann wie ein Körper. Die durch das Pressen mögliche Erhöhung der Verluste läßt sich durch das Glühen beseitigen.

Die einzelnen Bleche können zusätzlich zu dem mit Hilfe der Einprägungen erzielten Zusammenhalt durch Umlackung zusammen gehalten werden.

Der besondere Vorteil der Herstellung der Elemente 21.1, 21.2 gemäß der zweiten Ausführung aus Blechen besteht in
- einer deutlichen Verringerung der Herstellungskosten,
- einer optimalen Anpassung an die geforderte Höhe,
- einer verlustfreien Leitung des magnetischen Flusses, so daß genaueste Ausgangsspannungen generiert werden.

Wie insbesondere Fig. ia, ib und 2b zeigen, weisen die ASIC-Schaltkreiselemente 6, 7 Anschlußelemente 6.1 und 7.1 auf, mit dem sie mit dem Leiterplattenelement 8 verbunden sind.

### Die Montage des Weitwinkel-Drehwinkelsensors wird wie folgt vorgenommen:

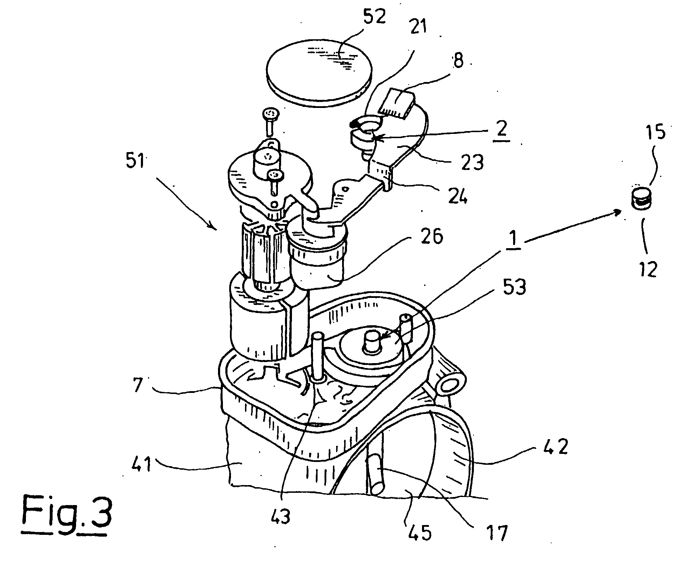

Die beiden Statorteilelemente 21.1 und 21.2 werden in eine Statorhalteeinheit 23 eingeformt. Die Statorhalteeinheit 23 (vgl. Fig. 3) kann das Gehäuse eines Drosselklappenelements sein. Die Statorhalteeinheit 23 besteht aus Kunststoff. Hierdurch ist es möglich, das Groß-Statorteilelement 21.1 und das Klein-Statorteilelement 21.2 lagegerecht einzuformen. Anschließend wird das Leiterplattenelement 8 mit den beiden ASIC-Schaltkreiselementen 6, 7 so eingebaut, daß die ASIC-Elemente 6, 7 in die Ausnehmungen 4, 5 eingeschoben werden. Dadurch, daß die beiden ASIC-Schaltkreiselemente 6, 7 mit dem Leiterplattenelement 8 verbunden sind, sind sie lage- und positionsgerecht in den Abstandsausnehmungen 4, 5 positioniert.

Bei der Rotoreinheit 1 wird um die Magnethalteeinheit 11, die eine Wellenhalteausnehmung 13 aufweist, das Magnetelement 12 mit Hilfe eines Haltekörpers 15 aus Kunststoff gehalten. Hierbei werden die beiden Magnetsegmentelemente 12.1 und 12.2 wenigstens teilweise in den Haltekörper 15 mit einer Magnethalteeinheit 11 eingeformt, so daß das Nord-Magnetsegmentelement 12.1 und das Süd-Magnetsegmentelement 12.2 lagegerecht mit dem Magnethalteelement 11 in dem Rotorelement gehalten sind. Das Magnethalteelement 11 übernimmt die herkömmliche Aufgabe eines Jochs. Die Magnetsegmentelemente 12.1 und 12.2 sind in Kunststoff eingeformt.

In einer alternativen Ausführung (nicht gezeigt) ist das Magnetelement 12 mit Hilfe eines Bandelements an der Magnethalteeinheit 11 gehalten.

Bei der Montage des Weitwinkel-Drehwinkelsensors (vgl. Fig. 3) wird auf eine in einen Gehäusekörper 7 einer Drosselklappeneinheit ragende Drosselklappenwelle 17 das in dem Haltekörper 15 gehaltene Magnetelement 12 mit dem Magenthalteelement 11 gesteckt. Ein Halteprofil 24 sichert und erleichtert die Positionierung der Statoreinheit 2 so, daß das Statorelement 21 unter Belassung eines Luftspaltes gegenüber dem Ringmagnetelement 12 positioniert wird. Eine Steckereinheit 26 wird in eine Steckerausnehmung 28 und ein Antriebseinheit 51 in eine Antriebsgehäuse 43 eingesetzt. Das Leiterplattenelement 8 ist hier zur Veranschaulichung liegend auf einem Kunststoffkörper 23 gezeigt. Die ASIC-Schaltktreiselemente 6, 7 sind justiert in den Abstandsausnehmungen 4, 5 eingesetzt und das Leiterplattenelement 8 ist bereits mit der Stekkereinheit verbunden. Ein Motor der Antriebseinheit 51 kann mit lagegerecht einjustierten Kohlebürsten und Motorwelle installiert werden.

Abschließend wird ein Zahnrad 53 auf einen Stift 44 gesteckt, so daß auch die Antriebseinheit komplett ist. Auf den Gehäusekörper mit dem eingebauten Weitwinkel-Drehwinkelsensor wird ein Deckel aufgesetzt und der Gehäusekörper verschlossen.

Das Halteprofil 24 durchzieht von der Steckereinheit 26 bis zum Leiterplattenelement 8 ein Stanzgitter mit mehreren nebeneinander liegenden Metallschienen. An der mit 24 bezeichneten Stelle weist das Stanzgitter eine Dehnungsschleife zur Aufnahme von Längenveränderungen auf. Der Kunststoffkörper 23 umgibt das Stanzgitter derart, daß die Statorteilelemente 21.1 und 21.2 mit den Abstandsausnehmungen 4, 5 lagegerecht gehalten werden.

Die Befestigungselemente 21.1-B1, ..., 21.2-B2 sorgen dafür, daß die Statorteilelemente sicher im Kunststoffkörper des einen Teils des Halteprofils 24 gehalten werden.

Mit dem Gehäuse der Steckereinheit 26 wird ein weiterer Teil des Halteprofils 24 aus Kunststoff geformt, so daß die Dehnungsschleife im Stanzgitter frei bleibt und einwandfrei ihre Funktion ausüben kann.

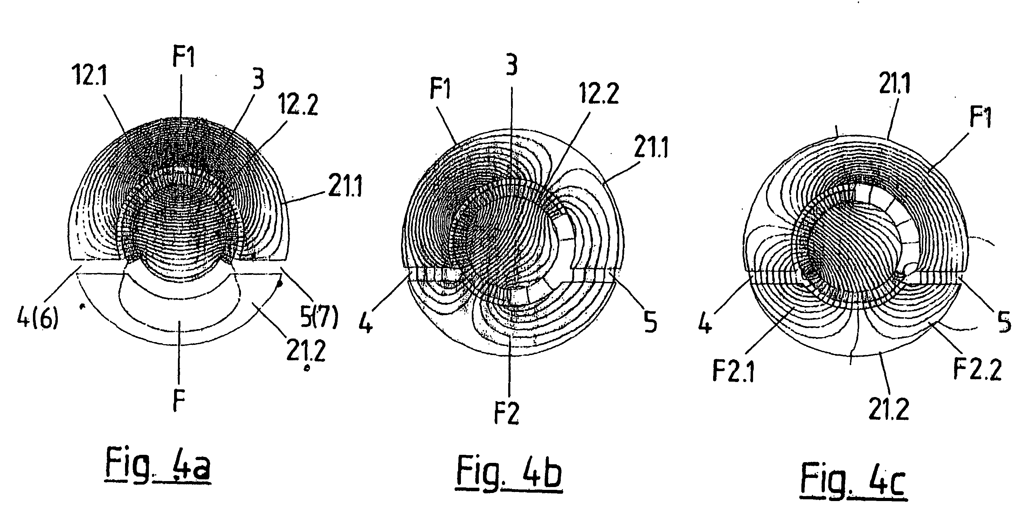

Die Funktion des Weitwinkel-Drehwinkelsensors wird anhand der Fig. 4a bis 5c erläutert. In Fig. 4a bis 4c sind verschiedene Positionen der Rotoreinheit 1 gegenüber der Statoreinheit 2 gezeigt.

In der Position 0° gemäß Fig. 4a liegen das Nord-Magnetsegmentelement 12.1 und das Süd-Magnetsegmentelement 12.2 zwischen den beiden Abstandsausnehmungen 4, 5. Ein Hauptfluß F1 fließt damit hauptsächlich im Groß-Statorelement 21.1, durch einen Luftspalt 3, der zwischen der Rotoreinheit 1 und der Statoreinheit 2 sich befindet und durch das Magnethalteelement 11.

Anschließend wird die Rotoreinheit 1 gegenüber der Statoreinheit 2 in die Position +60° gemäß Fig. 4b bewegt. Hierbei durchfließt der Hauptfluß F1 das Groß-Statorteilelement 21.1, die Abstandsausnehmung 4 wenigstens teilweise und schließt sich über den Luftspalt 3 und das Magnethalteelement 11. Außerdem bildet sich ein Nebenfluß F2 aus, der das Klein-Statorelement 21.2, die Abstandsausnehmung 5 und damit das ASIC-Schaltkreiselement 7 und teilweise das Groß-Statorteilelement 21.1 durchfließt.

Im nächsten Schritt wird die Rotoreinheit 1 gegenüber der Statoreinheit 2 in die Position +120° gemäß Fig. 4c verdreht. Hierbei durchfließt der Hauptfluß F1 im Wesentlichen das Groß-Statorteilelement 21.2 und wird über den Luftspalt 3 und das Magnethalteelement 11 geschlossen. Der Hauptfluß F1 durchdringt die Abstandsausnehmung 5 und das ASIC-Schaltkreislelement 7. Der Nebenfluß F2 hingegen unterteilt sich in einen Teil-Nebenfluß F2.1, der hauptsächlich um die Abstandsausnehmung 4 sich bewegt und einen Teil-Nebenfluß F2.2, der sich hauptsächlich um die Abstandsausnehmung 5 bewegt. Die beiden Nebenflüsse sind gleich groß.

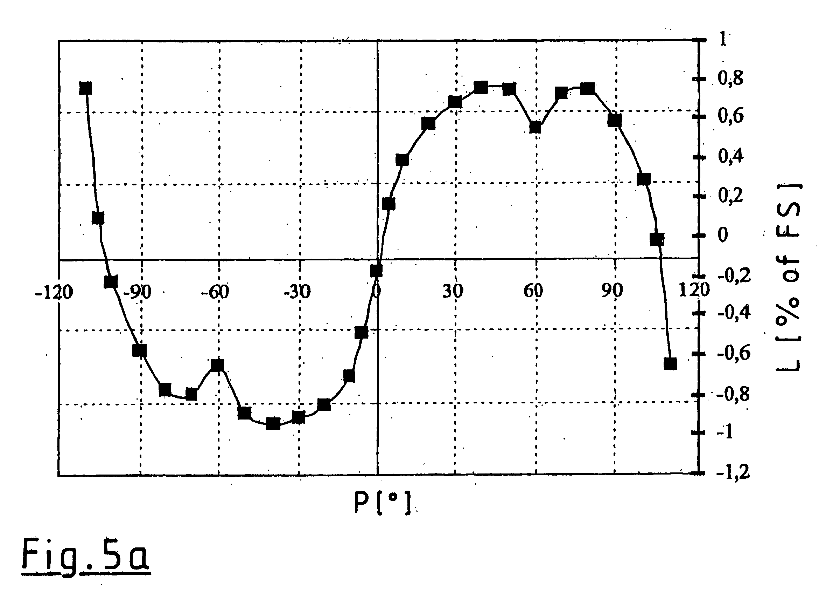

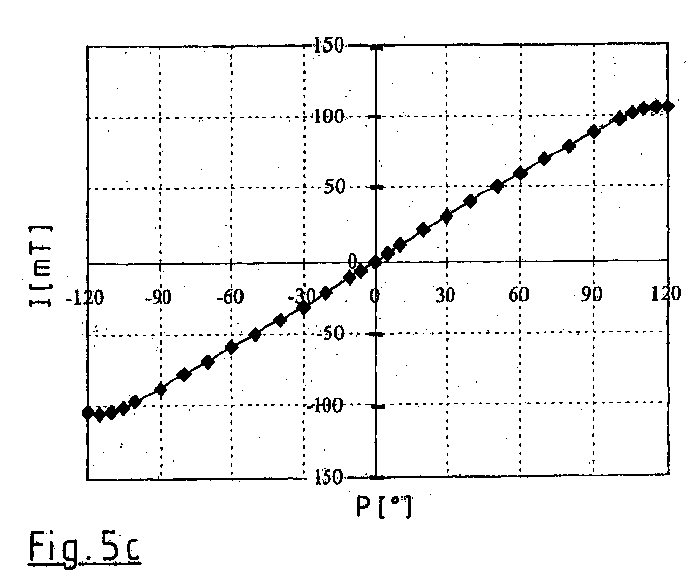

Bei der Bewegung zwischen 0° und 120° hat eine Linearität L, wie Fig. 5a zeigt, gegenüber einer Position P einen im Wesentlichen sinusförmigen Verlauf, der systembedingt ist.

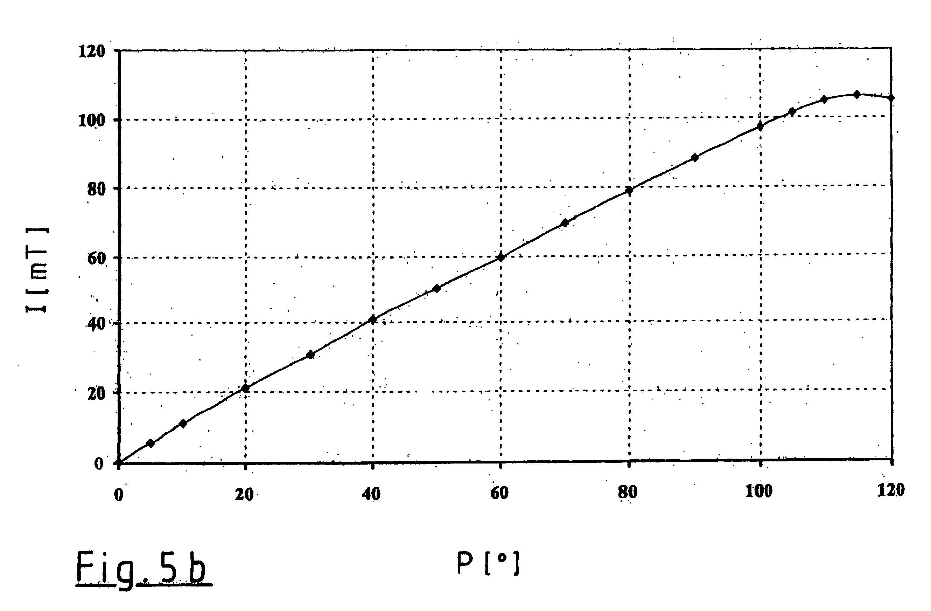

Wesentlich ist aber, wie Fig. 5b zeigt, daß die Induktion I innerhalb einer Abstandsausnehmung (in mT) gegenüber der Position P (in Grad von 0° bis 120°) im Wesentlichen linear verläuft.

Hierdurch ist es möglich, bei einer Drehung der Rotoreinheit in beide Drehrichtungen, ein Ausgangssignal zu erzeugen, wie es in Fig. 5c gezeigt ist. Und zwar wird ein Ausgangssignal abgegeben in Abhängigkeit von der Induktion, das zwischen -120° und +120° linear ist. Dadurch ist es möglich, ohne Unterbrechung den Winkel, der zwischen der Rotoreinheit 1 und der Statoreinheit 2 eingenommen wird, von -120° bis +120° linear zu erfassen. Durch die lineare Erfassung ist es möglich, die jeweilige Position genau zu ermitteln und das ermittelte Signal für eine weitere Verarbeitung zu benutzen.

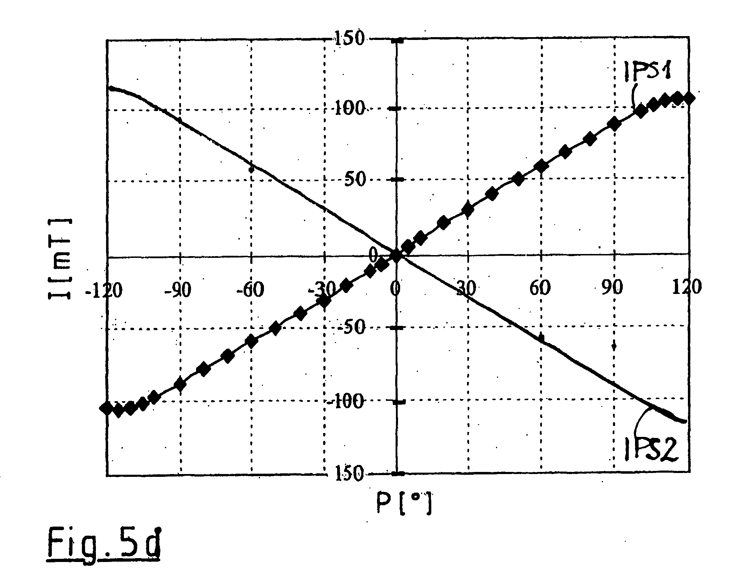

Das Ausgangssignal in Fig. 5d wird von ASICs 6 und 7 in gleicher Kurvenform abgegeben.

Die beiden ASICs 6 und 7 sind als Schaltkreiselemente ausgebildet, die wenigstens ein Hall-Element, eine Rechnereinheit, einen Lese/Schreib (RAM)- und einen Lese (ROM)-Speicher aufweisen. Um die Ausgabekurven IPS1 und IPS2 hinsichtlich Steigung und/oder Linearität einjustieren zu können, werden über die Steckereinheit Korrekturwerte mittels der Rechnereinheit in den RAM eingegeben. Die Korrekturwerte werden in feinabgestuften Größen abgerufen. Führen die eingegebenen Korrekturwerte zum gewünschten Justierergebnis, werden sie durch die Rechnereinheit vom RAM in den ROM eingegeben. Hierbei ist der Festwertspeicher ROM als EEPROM ausgebildet, der bei Bedarf eine Nachjustierung zuläßt.

Mit Hilfe der ASICs 6, 7 lassen sich gegenläufige Ausgabekurven IPS1, IPS2 auf dreierlei Art und Weise erzeugen:
1. mit Hilfe von Korrekturwerten,
2. durch Drehung des ASICs 7 gegenüber dem ASIC 6 in seiner Abstandsausnehmung 5 um 180°,
3. Drehung des ASICs 7 gegenüber ASIC 6 um 180° und mit Hilfe von Korrekturwerten.

Durch die Anwendung der dritten Möglichkeit lassen sich genaueste Ausgangskurven erzeugen. Diese Ausgangskurven lassen sich zur Überwachung von Betriebsgrößen, wie Versorgungsspannungen, insbesondere Spannungsschwankungen, Kurzschlüssen, Masseschlüssen etc., Versorgungsstrom etc. verwenden.

Hierzu werden beide ASICs an eine gemeinsame Spannungsversorgung angeschlossen.

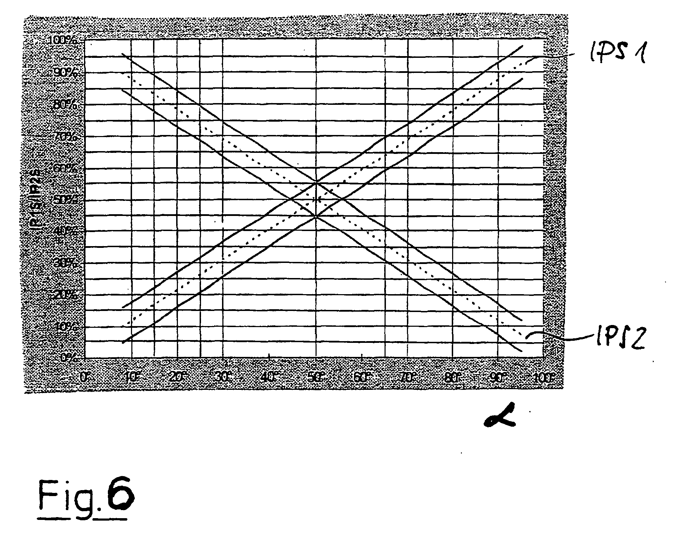

Dreht sich nun die Drosselklappenwelle 7 in einem Winkel α wie Fig. 6 zeigt, steigt die Ausgangskurve IPS1 an, während die Ausgangskurve IPS2 in gleichem Maße fällt. Bei 50° kreuzen sich IPS1 und IPS2. Während IPS1 bei α=90° auf etwa 95% steigt, fällt IPS2 auf etwa 5%.

Schwankungen in der gemeinsamen Versorgungsspannung bedingen abweichende Kurvenverläufe. Zu beiden Seiten sind mögliche Abweichungen dargestellt. Treten beim normalen Betrieb Abweichungen auf, die außerhalb der möglichen Abweichungen liegen, werden diese Werte von einer Zentralrechnereinheit als Störungen gewertet und nach einem bestimmten Bewertungsmodus angezeigt, gemeldet oder Notfallmaßnahmen eingeleitet.

Der besondere Vorteil der Verwendung des Weitwinkelsensors für eine solche Überwachungsausgabe liegt darin, daß präzise Ausgangskurven IPS1 und IPS2 und deren Abweichungen erzeugt werden, die eine sichere Überwachung ermöglichen. Erfaßt werden Fehler wie beschrieben, die nicht durch mögliche Eigenfehler wie z. B. bei Widerstandseinheiten, gestört werden.

## Patentansprüche

1. Vorrichtung zur berührungslosen Erfassung von Drehbewegungen sich relativ zueinander bewegender Teile mit
- einer asymmetrisch geteilten Statoreinheit (2), bestehend aus zwei Statorteilelementen (21.1, 21.2), die zwischen sich zwei Abstandsausnehmungen (4, 5) freilassen,
- wobei in wenigstens einer Abstandsausnehmung (4, 5) wenigstens eine Hall-Einheit (6, 7) angeordnet ist und
- wobei die Statorteilelemente teilringförmig in ein Groß- Statorteilelement (21.1) und ein Klein- Statorteilelement (21.2) geteilt sind,
- wobei das Groß-Statorteilelement einen Bereich von mehr als 180° und das Klein-Statorteilelement einen Bereich von weniger als 180° eines Kreisbogens umfaßt, und
- wobei zwischen dem Groß-Statorteilelement (21.1) und dem Klein - Statorteilelement (21.2) die beiden Abstandsausnehmungen (4, 5) tangential, d.h. auf einer Tangente an einen gedachten Kreis um den Mittelpunkt des durch Großstator- und Kleinstatorelement gebildeten Rings liegend, angeordnet sind,
- wobei das Groß- und das Kleinstatorteilelement (21.1, 21.2) wenigstens teilweise in einem zweiten Teil (23) aus einem magnetisch nicht leitenden Material eingeformt sind,
- einer Rotoreinheit (1), bestehend aus einem Magnetelement (12), das von einem Magnethalteelement (11) gehalten ist und das unter Belassung eines Luftspaltes (3) gegenüber den Statorteilelementen (21.1, 21.2) bewegbar ist,
- wobei das Magnetelement (12) aus zwei magnetisch bipolaren Magnetsegmentelementen (12.1, 12.2) besteht, die wenigstens teilweise in einem ersten Teil (15) aus einem magnetisch nicht leitenden Material angeordnet sind,
**dadurch gekennzeichnet, daß**
das Magnetelement aus zwei im Wesentlichen gleich langen magnetisch bipolaren Magnetsegmentelementen (12.1, 12.2) besteht, die jeweils einen Bereich von 90° oder mehr umfassen, wobei die Magnetsegmentelemente (12.1, 12.2) in das erste Teil (15) wenigstens teilweise eingeformt sind.

2. Vorrichtung nach Anspruch 1, **dadurch gekennzeichnet, daß** die in den Abstandsausnehmungen (4,5) angeordneten Hall-Einheiten (6, 7) mit einem terplattenelement (8) verhunden sind.

3. Vorrichtung nach Anspruch 1 oder 2, **dadurch gekennzeichnet, daß** das Großund das Klein-Statorteilelement (21.1, 21.2) im Bereich der Abstandsausnehmungen zwischen einem Groß- und einem Klein-Statorteilelement Statorteilelementvorsprünge aufweisen.

4. Vorrichtung nach einem der Ansprüche 1 bis 3, **dadurch gekennzeichnet, daß** das Groß-Statorteilelement (21.1) und das Klein-Statorteilelement (21.2) jeweils wenigstens ein Statorbefestigungselement (21.1-B1, 21.1-B2, 21.2-B1, 21.2-B2) aufweist.

5. Vorrichtung nach einem der Ansprüche 1 bis 4, **dadurch gekennzeichnet, daß** am Groß-Statorteilelement sich spiegelbildlich gegenüberliegend zwei Groß-Statorbefestigungselemente (21.1-B1, 21.1-B2) angeordnet sind.

6. Vorrichtung nach einem der Ansprüche 1 bis 5, **dadurch gekennzeichnet, daß** am Klein-Statorteilelement (21.2) sich spiegelbildlich gegenüberliegend zwei Klein-Statorbefestigungselemente (21.2-B1, 21.2-B2) angeordnet sind.

7. Vorrichtung nach einem der Ansprüche 1 bis 6, **dadurch gekennzeichnet, daß** die Magnetsegment elemente (12.1, 12.2) mit einem um sie wenigstens teilweise umformten Bandelement an der Magnethalteeinheit (11) gehalten sind.

8. Vorrichtung nach einem der Ansprüche 1 bis 7, **dadurch gekennzeichnet, daß** die Magnetsegment elemente ( 12.1, 12.2) wenigstens teilweise in einen Haltekörper (15) eingeformt sind, der mit einer Drosselklappenwelle verbunden ist.

9. Vorrichtung nach einem der Ansprüche 1 bis 8, **dadurch gekennzeichnet, daß** ein Magnetsegmentelement ein Nord- und das andere Magnetsegmentelement ein Süd-Magnetsegmentelement (12.1,12.2) ist.

10. Vorrichtung nach einem der Ansprüche 1 bis 9, **dadurch gekennzeichnet, daß** das zweite Teil ein Drosselklappenteilgehäuse oder ein Halteprofil (24) ist und das erste Teil mit einer Drosselklappenwelle verbunden es ist.

11. Vorrichtung nach einem der Ansprüche 1 bis 10, **dadurch gekennzeichnet, daß** das Groß- und das Klein-Statorteilelement (21.1, 21.2) aus einem magnetisch leitenden Material hergestellt sind.

12. Vorrichtung nach einem der Ansprüche 1 bis 11, **dadurch gekennzeichnet, daß** das magnetisch leitende Material ein gesintertes Eisen oder gestanztes Weicheisenblech ist.

13. Vorrichtung nach einem der Ansprüche 1 bis 12, **dadurch gekennzeichnet, daß** das Groß- und das Klein-Statorteilelement (21.1, 21.2) aus gestapelten Blechen (23') besteht.

14. Vorrichtung nach einem der Ansprüche 1 bis 13, **dadurch gekennzeichnet, daß** in die Bleche (23') wenigstens eine Einprägung (22') eingeformt ist.

15. Vorrichtung nach einem der Ansprüche 1 bis 14, **dadurch gekennzeichnet, daß** die gestapelten Bleche (23') mit den Einprägungen (22') zusammengehalten sind.

16. Vorrichtung nach einem der Ansprüche 1 bis 15, **dadurch gekennzeichnet, daß** die Bleche (23') Texturbleche sind.

17. Vorrichtung nach einem der Ansprüche 1 bis 16, **dadurch gekennzeichnet, daß** das erste und/oder das zweite Teil aus Kunststoff bestehen.

18. Vorrichtung nach einem der Ansprüche 1 bis 17, **dadurch gekennzeichnet, daß** eine erste Hall-Einheit (6) in einer ersten Abstandsausnehmung (4) und eine zweite Hall-Einheit (7) in einer zweiten Abstandsausnehmung (5) 0° zueinander versetzt angeordnet sind.

19. Vorrichtung nach einem der Ansprüche 1 bis 18, **dadurch gekennzeichnet, daß** eine erste Hall-Einheit (6) in einer ersten Abstandsausnehmung (4) und eine zweite Hall-Einheit (7) in einer zweiten Abstandsausnehmung um 180° zueinander versetzt angeordnet ist.

20. Vorrichtung nach einem der Ansprüche 1 bis 19, **dadurch gekennzeichnet, daß** eine erste und eine zweite Hall-Einheit als ASIC-Schaltkreiselement (6, 7) ausgebildet ist, die wenigstens ein Hallelement aufweisen.

21. Vorrichtung nach Anspruch 20, **dadurch gekennzeichnet, daß** das Schaltkreiselement (6, 7) außer dem Hallelement wenigstens einen Lesespeicher-ROM und einen Lese/Schreibspeicher-RAM aufweist, die wenigstens mit einer Rechnereinheit verbunden sind.

22. Verfahren zur Überwachung eines veränderlichen Betriebsparameters mit wenigstens zwei einen Betätigungsgrad eines Fahrpedals oder einer Drosselklappe erfassenden Meßeinrichtungen (6, 7), mit gemeinsamer Spannungsversorgung, die wenigstens zwei den Betätigungsgrad repräsentierende Ausgangskurven (IPS1, IPS2) erzeugen, **dadurch gekennzeichnet, daß** als Meßeinrichtungen zwei ASIC-Schaltkreiselemente (6, 7) einer Vorrichtung zur berührungslosen Erfassung von Drehbewegungen sich relativ zueinander bewegender Teile nach wenigstens einem der Ansprüche 20 oder 21 verwendet werden.

23. Verfahren nach Anspruch 22, **dadurch gekennzeichnet, daß** die Ausgangskurven (IPS1, IPS2) zwischen zwei Extremwerten über den gesamten Bereich des Betätigungsgrades linear mit unterschiedlicher Steigung ausgegeben werden.

24. Verfahren nach Anspruch 22, **dadurch gekennzeichnet, daß** die Ausgangskurven (IPS1, IPS2) zwischen zwei Extremwerten über den gesamten Bereich des Betätigungsgrades linear mit gegenläufiger Steigung ausgegeben werden.

25. Verfahren ach einem der Ansprüche 22 bis 24, **dadurch gekennzeichnet, daß** die Ausgangskurven (IPS1, IPS2) und deren Abweichungen einer Zentralrechnereinheit zugeführt werden, die über vorgegebene Toleranzbereiche hinausgehende Abweichungen ermittelt und Störung des Betriebsparameters ausgibt.

## Claims

1. An apparatus for the non-contact detection of rotary motions of parts moving relative to one another, having
- an asymmetrically divided stator unit (2) comprising two stator partial elements (21.1, 21.2) which leave two spacing gaps (4, 5) between them,
- wherein in at least one spacing gap (4, 5) at least one hall unit (6, 7) is arranged and
- wherein the stator partial elements are divided in the manner of partial rings into a large stator partial element (21.1) and a small stator partial element (21.2),
- wherein the large stator partial element comprises a range of more than 180° and the small stator partial element comprises a range of less than 180° of a circle, and
- wherein between said large stator partial element (21.1) and said small stator partial element (21.2), the two spacing gaps (4, 5) are arranged tangentially, i.e. on a tangent to an imaginary circle around the centre point of the annulus formed by the large and the small stator element,
- wherein the large and small stator partial elements (21.1, 21.2) are at least partially moulded into a second member (23) of a magnetically non-conductive material,
- a rotor unit (1) comprising a magnet element (12) held by a magnet holding element (11) and moveable with respect to the stator partial elements (21.1, 21.2) with an air gap (3) left between them,
- wherein the magnet element (12) consists of two magnetically bipolar magnet segment elements (12.1, 12.2) which are at least partially moulded into a first member (15) of a magnetically non-conductive material,
**characterised in that**
the magnet element consists of two magnetically bipolar magnet segment elements (12.1, 12.2) of essentially equal length, each comprising a range of 90° or more, wherein the magnet segment elements (12.1, 12.2) are at least partially moulded into the first member (15).

2. The apparatus according to claim 1, **characterised in that** the hall units (6, 7) arranged in the spacing gaps (4, 5) are connected with a printed circuit board element (8).

3. The apparatus according to claim 1 or 2, **characterised in that** the large and small stator partial elements (21.1, 21.2) have stator partial element protrusions in the area of the spacing gaps between large and small stator partial elements.

4. The apparatus according to any one of claims 1 to 3, **characterised in that** the large stator partial element (21.1) and the small stator partial element (21.2) each have at least one stator attachment element (21.1-B1, 21.1-B2, 21.2-B1, 21.2-B2).

5. The apparatus according to any one of claims 1 to 4, **characterised in that**, on the large stator partial element, two large stator attachment elements (21.1-B1, 21.1-B2) are positioned opposite each other in mirror image.

6. The apparatus according to any one of claims 1 to 5, **characterised in that**, on the small stator partial element (21.2), two small stator attachment elements (21.2-B1, 21.2-B2) are positioned opposite each other in mirror image.

7. The apparatus according to any one of claims 1 to 6, **characterised in that** the magnet segment elements (12.1, 12.2) are held at the magnet holding unit (11) by a strip element formed at least partially around it.

8. The apparatus according to any one of claims 1 to 7, **characterised in that** the magnet segment elements (12.1, 12.2) are at least partially integrated into a holding body (15) which is connected with a throttle valve shaft.

9. The apparatus according to any one of claims 1 to 8, **characterised in that** one magnet segment element is a north-pole and the other magnet segment element is a south-pole magnet segment element (12.1, 12.2).

10. The apparatus according to any one of claims 1 to 9, **characterised in that** the second member is a throttle valve part housing or a holding profile (24) and the first member is connected with a throttle valve shaft.

11. The apparatus according to any one of claims 1 to 10, **characterised in that** the large and small stator partial elements (21.1, 21.2) are of a magnetically conductive material.

12. The apparatus according to any one of claims 1 to 11, **characterised in that** the magnetically conductive material is sintered iron or blanked soft iron sheeting.

13. The apparatus according to any one of claims 1 to 12, **characterised in that** the large and small stator partial elements (21.1, 21.2) consist of stacked metal sheets (23').

14. The apparatus according to any one of claims 1 to 13, **characterised in that** at least one embossing (22') is formed in the metal sheets (23').

15. The apparatus according to any one of claims 1 to 14, **characterised in that** said stacked metal sheets (23') are held together by embossings (22').

16. The apparatus according to any one of claims 1 to 15, **characterised in that** said metal sheets (23') are textured sheets.

17. The apparatus according to any one of claims 1 to 16, **characterised in that** said first and/or second members are of plastic material.

18. The apparatus according to any one of claims 1 to 17, **characterised in that** a first hall unit (6) is arranged in a first spacing gap (4) and a second hall unit (7) is arranged in a second spacing gap (5) offset from each other by 0°.

19. The apparatus according to any one of claims 1 to 18, **characterised in that** a fist hall unit (6) is arranged in a first spacing gap (4) and a second hall unit (7) is arranged in a second spacing gap (5) offset from each other by 180°.

20. The apparatus according to any one of claims 1 to 19, **characterised in that** a first and a second hall unit are formed as ASIC circuit elements (6, 7) which have at least one hall element.

21. The apparatus according to claim 20, **characterised in that** said circuit element (6, 7) has, apart from the hall element, at least one read memory ROM and a read/write memory RAM, which are connected at least with one computer unit.

22. A method of monitoring a variable operating parameter with at least two measuring means (6, 7) having a common voltage supply which detect a degree of operation of an accelerator pedal or a throttle valve and which generate at least two output curves (IPS1, IPS2) representing said degree of operation, **characterised in that** two ASIC circuit elements (6, 7) of an apparatus for the non-contact detection of rotary motions of parts moving relative to one another according to at least one of claims 20 or 21 are used as said measuring means.

23. The method according to claim 22, **characterised in that** said output curves (IPS1, IPS2) are linearly output between two extreme values over the entire range of the degree of operation and with different slopes.

24. The method according to claim 22, **characterised in that** said output curves (IPS1, IPS2) are linearly output between two extreme values over the entire range of the degree of operation and with opposite slopes.

25. The method according to any one of claims 22 to 24, **characterised in that** said output curves (IPS1, IPS2) and their deviations are input into a central processing unit which detects deviations exceeding predetermined tolerance ranges and outputs a fault condition of the operating parameter.

## Revendications

1. Dispositif pour la détection sans contact de mouvements de rotation de pièces se déplaçant l'une par rapport à l'autre avec
- une unité de stator (2) divisée asymétriquement constituée par deux éléments partiels de stator (21.1, 21.2) qui laissent libres entre eux deux cavités d'écartement (4, 5)
- au moins une unité de Hall (6, 7) étant placée dans au moins une cavité d'écartement (4, 5) et
- les éléments partiels de stator étant divisés en forme d'anneau partiel en un grand élément partiel de stator (21.1) et en un petit élément partiel de stator (21.2),
- le grand élément partiel de stator comprenant une plage de plus de 180° et le petit élément partiel de stator comprenant une plage de moins de 180° d'un arc de cercle et
- les deux cavités d'écartement (4, 5) étant placées tangentiellement entre le grand élément partiel de stator (21.1) et le petit élément partiel de stator (21.2), c'est-à-dire situées sur une tangente sur un cercle imaginaire autour du centre de l'anneau formé par le grand élément partiel de stator et le petit élément partiel de stator,
- le grand élément partiel de stator et le petit élément partiel de stator (21.1, 21.2) étant moulés au moins partiellement dans une seconde pièce (23) en un matériau non conducteur magnétiquement,
- une unité de rotor (1) constituée par un élément magnétique (12) qui est maintenu par un élément de retenue d'aimant (11 ) et qui peut être déplacée par rapport aux éléments partiels de stator (21.1, 21.2) en laissant une discontinuité magnétique (3),
- l'élément magnétique (12) étant constitué par deux éléments de segment d'aimant bipolaires magnétiquement (12.1, 12.2) qui sont placés au moins partiellement dans une première partie (15) en un matériau non conducteur magnétiquement,
**caractérisé en ce**
**que** l'élément magnétique est constitué par deux éléments de segment d'aimant (12.1., 12.2) bipolaires magnétiquement, substantiellement de même longueur, qui comprennent respectivement une plage de 90° ou plus, les éléments de segment d'aimant (12,1, 12,2) étant moulés au moins partiellement dans la première pièce (15).

2. Dispositif selon la revendication 1, **caractérisé en ce que** les unités de Hall (6, 7) placées dans les cavités d'écartement (4, 5) sont reliées à un élément de plaquette imprimée (8).

3. Dispositif selon la revendication 1 ou 2, **caractérisé en ce que** le grand élément partiel de stator et le petit élément partiel de stator (21.1, 21.2) présentent, dans la zone des cavités d'écartement, des saillies pour élément partiel de stator entre un grand élément partiel de stator et un petit élément partiel de stator.

4. Dispositif selon l'une des revendications 1 à 3, **caractérisé en ce que** le grand élément partiel de stator (21.1) et le petit élément partiel de stator (21.2) présente respectivement au moins un élément de fixation de stator (21.1-B1, 21.1-B2, 21.2 B1, 21.2-B2).

5. Dispositif selon l'une des revendications 1 à 4, **caractérisé en ce que** deux éléments de fixation de grand élément de stator (21.1-B1, 21.1.-B2) sont placés en étant opposés de manière réfléchie sur le grand élément partiel de stator.

6. Dispositif selon l'une des revendications 1 à 5, **caractérisé en ce que** deux éléments de fixation de petit élément de stator (21.2-B1, 21.2.-B2) sont placés en étant opposés de manière réfléchie sur le petit élément partiel de stator.

7. Dispositif selon l'une.des revendications 1 à 6, **caractérisé en ce que** les éléments de segment d'aimant (12.1, 12.2) sont maintenus sur l'unité de maintien d'aimant (11 ) avec un élément en bande qui est moulé au moins partiellement autour de ceux-ci.

8. Dispositif selon l'une des revendications 1 à 7, **caractérisé en ce que** les éléments de segment d'aimant (12.1, 12.2) sont moulés au moins partiellement dans un corps de maintien (15) qui est relié à un arbre à papillon d'étranglement.

9. Dispositif selon l'une des revendications 1 à 8, **caractérisé en ce qu'**un élément de segment d'aimant est un élément de segment d'aimant nord et l'autre élément de segment d'aimant est un élément de segment d'aimant sud (12.1, 12.2).

10. Dispositif selon l'une des revendications 1 à 9, **caractérisé en ce que** la seconde pièce est un boîtier de pièce à papillon d'étranglement ou un profil de retenue (24) et la première pièce est reliée à un arbre à papillon d'étranglement.

11. Dispositif selon l'une des revendications 1 à 10, **caractérisé en ce que** le grand élément partiel de stator et le petit élément partiel de stator (21.1, 21.2) sont fabriqués en un matériau conducteur magnétiquement.

12. Dispositif selon l'une des revendications 1 à 11, **caractérisé en ce que** le matériau conducteur magnétiquement est un fer fritté ou une tôle de fer doux estampé.

13. Dispositif selon l'une des revendications 1 à 12, **caractérisé en ce que** le grand élément partiel de stator et le petit élément partiel de stator (21.1, 21.2) est constitué par des tôles empilées (23').

14. Dispositif selon l'une des revendications 1 à 13, **caractérisé en ce qu'**au moins un estampage (22') est moulé dans les tôles (23').

15. Dispositif selon l'une des revendications 1 à 14, **caractérisé en ce que** les tôles empilées (23') sont maintenues ensemble avec les estampages (22').

16. Dispositif selon l'une des revendications 1 à 15, **caractérisé en ce que** les tôles (23') sont des tôles à texture.

17. Dispositif selon l'une des revendications 1 à 16, **caractérisé en ce que** la première et/ou la seconde pièce sont en matière plastique.

18. Dispositif selon l'une des revendications 1 à 17, **caractérisé en ce qu'**une première unité de Hall (6) est placée dans une première cavité d'écartement (4) et une seconde unité de Hall (7) est placée décalée de 0° par rapport l'une à l'autre dans une seconde cavité d'écartement (5).

19. Dispositif selon l'une des revendications 1 à 18, **caractérisé en ce qu'**une première unité de Hall (6) est placée dans une première cavité d'écartement (4) et une seconde unité de Hall (7) est placée dans une seconde cavité d'écartement (5) en étant décalées de 180° l'une par rapport à l'autre.

20. Dispositif selon l'une des revendications 1 à 19, **caractérisé en ce qu'**une première unité de Hall et une seconde unité de Hall est configurée comme élément de circuit intégré propre à une application (6, 7) qui présente au moins un élément de Hall.

21. Dispositif selon la revendication 20, **caractérisé en ce que** l'élément de circuit intégré (6, 7) présente, à part l'élément de Hall, au moins une mémoire morte de lecture et une mémoire vive de lecture-écriture qui sont reliées au moins à une unité d'ordinateur.

22. Procédé pour la surveillance d'un paramètre de service variable avec au moins deux dispositifs de mesure (6, 7) qui comprennent un degré d'actionnement d'une pédale ou d'un papillon d'étranglement, avec une alimentation en courant commune, qui produisent au moins deux courbes de sortie (IPS1, IPS2) qui représentent le degré d'actionnement, **caractérisé en ce qu'**ils sont utilisés comme dispositifs de mesure deux éléments de circuit intégré propre à une application (6, 7) d'un dispositif pour la détection sans contact de mouvements de rotation de pièces qui se déplacent l'une par rapport à l'autre selon au moins l'une des revendications 20 ou 21.

23. Procédé selon la revendication 22, **caractérisé en ce que** les courbes de sortie (IPS1, IPS2) sont sorties entre deux valeurs extrêmes sur toute la plage du degré d'actionnement linéairement avec une pente différente.

24. Procédé selon la revendication 22, **caractérisé en ce que** les courbes de sortie (IPS1, IPS2) sont sorties entre deux valeurs extrêmes sur toute la plage du degré d'actionnement linéairement avec une pente en sens contraire.

25. Procédé selon l'une des revendications 22 à 24, **caractérisé en ce que** les courbes de sortie (IPS1, IPS2) et leurs divergences sont amenées à une unité d'ordinateur central qui détermine les divergences au-delà de plages de tolérances prédéfinies et qui sort le dérangement du paramètre de service.
